# EUROPEAN PATENT SPECIFICATION

(11) **EP 2 637 354 B1**
(45) Date of publication and mention of the grant of the patent: **24.08.2016**
(21) Application number: 11844827.3
(22) Date of filing: 22.09.2011
(51) Int. Cl.: H04L 12/707, H04L 12/703, H04L 12/741

(54) **METHOD AND DEVICE FOR MULTILAYER PROTECTION**
VERFAHREN UND VORRICHTUNG FÜR EINEN MEHRSCHICHTIGEN SCHUTZ
PROCÉDÉ ET DISPOSITIF POUR LA PROTECTION MULTICOUCHE

(30) Priority: 02.12.2010 CN 201010570700
(43) Date of publication of application: 11.09.2013
(73) Proprietor: ZTE Corporation, Shenzhen, Guangdong 518057 (CN)
(72) Inventor: WANG, Pengjun, Shenzhen Guangdong 518057 (CN)
(74) Representative: Vossius & Partner Patentanwälte Rechtsanwälte mbB
(86) International application number: PCT/CN2011/080061
(87) International publication number: WO 2012/071936

(56) References cited:
- CN-A- 1 808 995
- CN-A- 101 036 126
- CN-A- 101 667 970
- CN-A- 102 064 961
- US-A1- 2008 056 294

## Description

### TECHNICAL FIELD

The disclosure relates to the field of communications, and in particular to a multilayer protection method and a multilayer protection device.

### BACKGROUND

With the development of network technologies, services based on Internet have new features as follows: real-time services develop rapidly and have various service forms; in the aspect of network form, network layering becomes more and more significant; different layers have corresponding protection switching, and in the aspect of reliability, the standard required by the traditional telecommunication network must be achieved, for example, the speed of protection switching is less than 50ms.

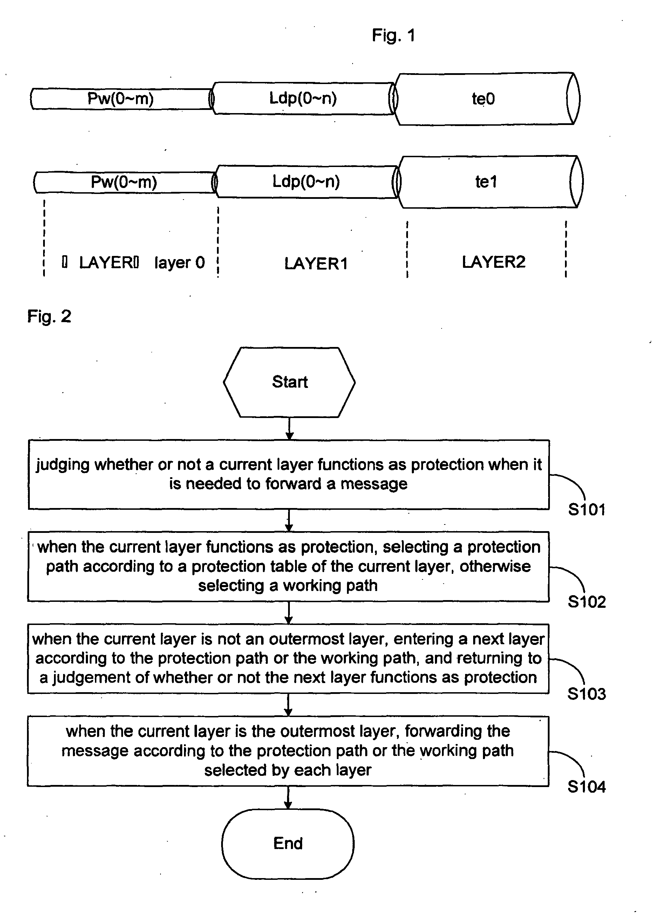

Referring to Fig. 1, when protection switching occurs on an outer-layer tunnel (te), all services of inner layers should be switched to an effective te. For this multilayer protection scheme, each level of protection has identical protection switching performance requirements. However, no effective method is proposed for multilayer protection at present. The services may include Pseudo-Wire (PW) services, Label Distribution Path (LDP) services established by the label distribution protocol, and the like.

According to CN 1808995 A, this invention relates to multi-layer automatic exchange optical network agent point protection method, which comprises the following steps: a, each area is abstracted into main agent point and prepare agent point on upper area; b, establishing neighbour relationship between main point and local other agent points; c, when the main point runs normally, the main point and prepare points real-time test; d, when the main point is abnormal, the prepare points receive the other point work into main point; e, when the main point recovers to normal status to automatically set prepare point.

According to CN 101036126 A, a technique protects traffic (IP) against the failure of a border router between two domains in a computer network using Fast Reroute and backup tunnels. The border router (i.e., the "protected border router") announces/advertises a list of all its adjacent next-hop routers (i.e., its "neighbors") residing in first and second domains interconnected by the protected border router. A neighbor in the first domain that is immediately upstream to the protected border router and that is configured to protect the border router (i.e., the "protecting router") learns address prefixes (i.e., "protected prefixes") reachable from the next-hop router in the second domain (i.e., "next-next-hops," NNHOPs to the protected prefixes from the protecting router). The protecting router calculates a backup tunnel to each NNHOP that excludes the protected border router, and associates each backup tunnel with protected prefixes accordingly. When the protected border router fails, Fast Reroute is triggered, and the protected prefixes are rerouted by the protecting router onto an appropriate backup tunnel to a corresponding NNHOP.

According to CN 101667970 A, the invention discloses a protection switching method and equipment thereof. The method is used for PE in MPLS L3VPN, the PE is provided with a primary path and a standby path about a called route, and a forwarding table of the PE is previously memorized with a primary inner layer mark corresponding to the primary path and a standby inner layer mark corresponding to the standby path. The method comprises the steps of: when occurring path switching, obtaining the switched path attribute and a corresponding outer layer mark, wherein the path attribute comprises the primary path or the standby path; obtaining the corresponding inner layer mark according to the switched path attribute in the forwarding table; and enveloping and transmitting a report with the obtained outer layer mark and the inner network mark. The invention realizes the fast switching of the inner layer mark and an outer network mark of the path when switching the primary path with the standby path.

According to US 2008/056294 A1, a control scheme is disclosed for controlling establishment of a standby channel route for an active channel route in a GMPLS network made up of plural transmission apparatuses. The standby channel route is formed by at least one standby channel route transmission apparatus, an ingress transmission apparatus, and an egress transmission apparatus. The control scheme involves transmitting from the ingress transmission apparatus to the standby channel route transmission apparatus a standby channel path establishing message including pre-reserve information for directing the standby channel route transmission apparatus to pre-reserve a standby channel path of the standby channel route, and setting the standby channel path to pre-reserved status within a band management table of the standby channel route transmission apparatus. The standby channel path that is set to pre-reserved status within the standby channel route transmission apparatus is externally recognized as free by the other transmission apparatuses.

### SUMMARY

The main purpose of the disclosure is to provide a multilayer protection method and a multilayer protection device, so as to provide protection switching for multilayer application scenes in a network.

The features of the method and device according to the present disclosure are defined in the independent claims, and the preferable features according to the present invention are defined in the dependent claims.

The multilayer protection method and the multilayer protection device provided by the disclosure set a protection table at each layer to provide forwarding path information needed by protection switching, in view of multilayer application scenes in a network, thereby providing the protection switching for the multilayer application scenes in the network.

### BRIEF DESCRIPTION OF THE DRAWINGS

Fig. 1 shows a diagram of a multilayer application scene in a network suitable for the disclosure;
Fig. 2 shows a flowchart of an embodiment of a multilayer protection method according to the disclosure;
Fig. 3 shows a diagram of system architecture of an embodiment of a multilayer protection method according to the disclosure;
Fig. 4 shows an architecture diagram of protection tables of all layers and corresponding forwarding tables in an embodiment of a multilayer protection method according to the disclosure;
Fig. 5 shows a flowchart of path selection in an embodiment of a multilayer protection method according to the disclosure;
Fig. 6 shows a flowchart of another embodiment of a multilayer protection method according to the disclosure;
Fig. 7 shows a structure diagram of an embodiment of a multilayer protection device according to the disclosure;
Fig. 8 shows a structure diagram of a selection module in an embodiment of a multilayer protection device according to the disclosure; and
Fig. 9 shows a structure diagram of another embodiment of a multilayer protection device according to the disclosure.

### DETAILED DESCRIPTION

The multilayer protection method and the multilayer protection device provided by the disclosure set a protection table at each layer to provide forwarding path information needed by protection switching, in view of multilayer application scenes in a network.

Referring to Fig. 2, an embodiment of a multilayer protection method of the disclosure is provided, which includes the following steps:
Step 101: judging whether or not a current layer functions as protection when it is needed to forward a message.

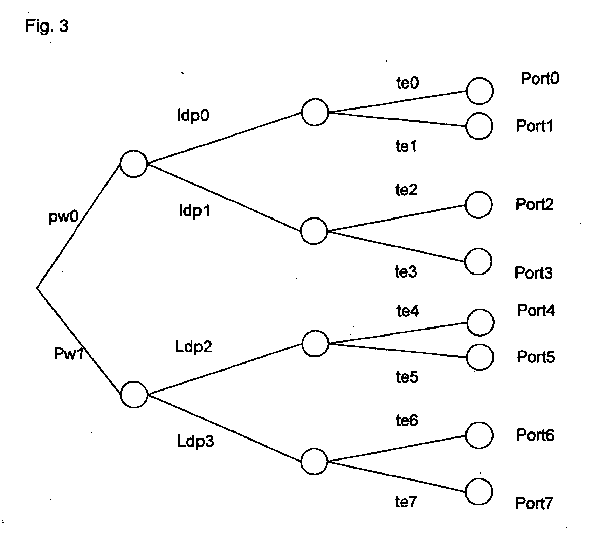

From multilayer protection scenes in a network at present, a model of multi-level protection can be abstracted; Referring to Fig. 3, an innermost path is set as LAYER 0, and outward in turn the paths are set as LAYER1, LAYER2...LAYERn; each layer is similar to a pipeline; when protection switching occurs on an outer layer, all services of the inner layers would be switched to an effective outer-layer path.

A protection table for each layer and a forwarding table corresponding to the protection table are set in the disclosure; the entire forwarding is based on level-to-level finding; an actual forwarding path and service forwarding information are obtained by finally integrating the forwarding information of each layer.

The structure of the protection table is as follows.

| |
|---|
| LAYER protect status |
| LAYER_indexMain |
| LAYER_indexSpare |

The structure of the corresponding forwarding table is as follows.

| |
|---|
| Current LAYER forwarding information |
| Outer LAYER protect flag |
| Outer LAYER index |

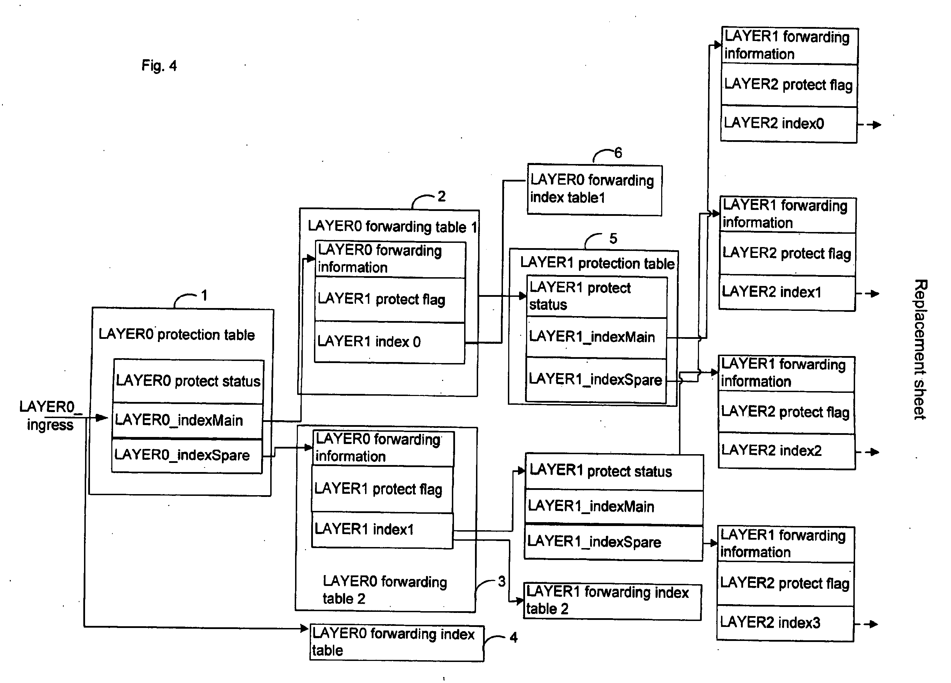

One protection table corresponds to two forwarding tables. When n is 2 in Fig. 3, what shown in Fig. 4 should be protection and forwarding tables corresponding to Fig. 3.

When it is needed to forward a message, it is judged whether LAYER0 functions as protection.
Step 102: when the current layer functions as protection, selecting a protection path according to a protection table of the current layer, otherwise selecting a working path.

If the current layer does not function as protection, a LAYER0 forwarding index Table 4 is queried to select a working path; the table structure of the forwarding index table is the same as that of the forwarding table corresponding to the protection table, wherein forwarding information in the forwarding index table is a working path label.

If the LAYER0 functions as protection, a LAYER0 protection Table 1 is queried to acquire a LAYER0 main/spare forwarding index, and it is learned whether to select a main protection path or a spare protection path currently according to the LAYER protect status information, that is, main/spare status information. If the main protection path is selected, a corresponding LAYER0 forwarding Table one 2 is queried through the LAYER_indexMain; if the spare protection path is selected, a corresponding LAYER0 forwarding Table two 3 is queried through the LAYER_indexSpare. And then according to the LAYER0 forwarding Table one 2 or LAYER0 forwarding Table two 3, LAYER0 forwarding information is acquired, wherein the LAYER0 forwarding information is protection path information, which generally is a protection path label.
Step 103: when the current layer is not an outermost layer, entering a next layer according to the protection path or the working path, and returning to a judgement of whether or not the next layer functions as protection.

It is judged whether or not the current layer is the outermost layer, if not, the LAYER0 forwarding Table one 2 or LAYER0 forwarding Table two 3 is queried; taking the LAYER0 forwarding Table one 2 for example, it can be learned whether or not the outer LAYER1 functions as protection by querying a LAYER1 protect flag; for example, the LAYER1 functions as protection when the LAYER1 protect flag is 1, and the LAYER1 does not function as protection when the LAYER1 protect flag is 0. When the LAYER1 protect flag is 1, the LAYER1 index0 points to a LAYER1 protection Table 5; when the LAYER1 protect flag is 0, the LAYER1 index0 points to a LAYER1 forwarding index Table one 6; and forwarding path information of the outer LAYER1 can be obtained according to the outer LAYER1 protection Table 5 or outer LAYER1 forwarding index Table one 6. And by such analogy, until forwarding path information of the outermost layer is obtained.
Step 104: when the current layer is the outermost layer, forwarding the message according to the protection path or the working path selected by each layer.

If the current layer is the outermost layer, the forwarding path information of each layer is integrated, and the message is forwarded according to the protection path or working path selected by each layer.

The multilayer protection method provided by the disclosure sets a protection table at each layer to provide forwarding path information needed by protection switching, in view of multilayer application scenes in a network, thereby providing the protection switching for the multilayer application scenes in the network.

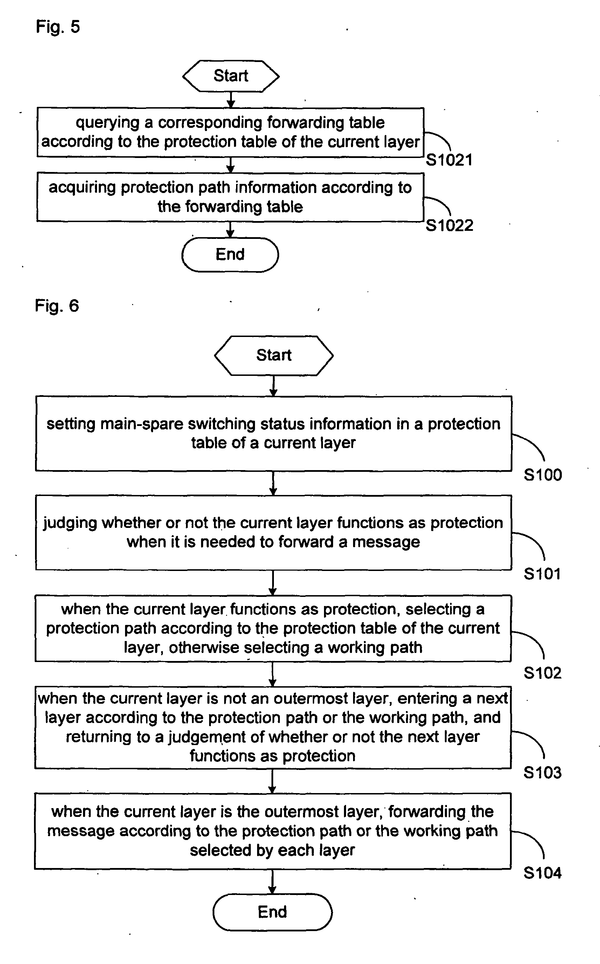

Referring to Fig. 5, in an embodiment of a multilayer protection method of the disclosure, step 102 may include the following steps:
Step 1021: querying a corresponding forwarding table according to the protection table of the current layer.
Step 1022: acquiring protection path information according to the forwarding table.

In an embodiment of a multilayer protection method of the disclosure, the forwarding table includes: current layer forwarding information, a protection flag and a path index. The protection table of the current layer includes: main-spare switching status information, a main protection path index and/or a spare protection path index.

Referring to Fig. 6, another embodiment of a multilayer protection method of the disclosure is provided, which includes the following steps before executing step 101:
Step 100: setting main-spare switching status information in the protection table of the current layer.

Take Fig. 3 for example, PW services may belong to LAYER0; LDP services may belong to LAYER1; and TE may belong to LAYER2.

When protection switching occurs on LAYER0, that is, protection switching occurs on the PW, it is only needed to set the LAYER protect status information as main-to-spare status in the protection table of LAYER0.

By such analogy, for the protection switching of each layer, it is only needed to change the LAYER protection status information in the protection table of the current layer, so that a correct forwarding path can be selected to forward the message when the message arrives.

On the basis of the previous embodiment, this embodiment sets main-spare switching status information according to the protection switching of each layer, so as to select a correct forwarding path.

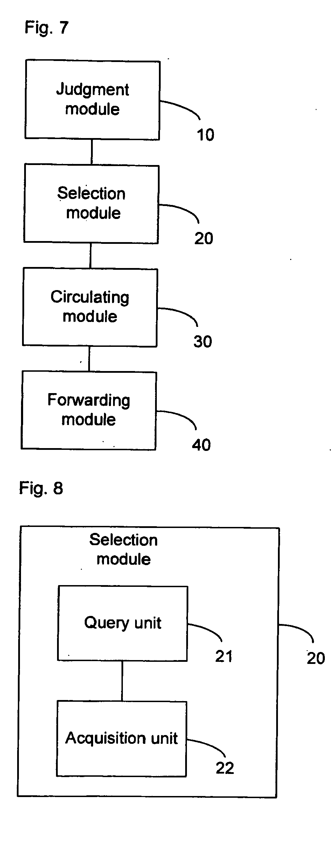

Referring to Fig. 7, an embodiment of a multilayer protection device of the disclosure is provided, which includes:
a judgment module 10, which is configured to judge whether or not a current layer functions as protection when it is needed to forward a message;
a selection module 20, which is configured to select a protection path according to a protection table of the current layer when the current layer functions as protection, and to select a working path when the current layer does not function as protection;
a circulating module 30, which is configured to enter a next layer according to the protection path or the working path when the current layer is not an outermost layer, and to return to a judgment of whether or not the next layer functions as protection; and
a forwarding module 40, which is configured to forward the message according to the protection path or the working path selected by each layer when the current layer is the outermost layer.

From multilayer protection scenes in a network at present, a model of multi-level protection can be abstracted; Referring to Fig. 3, an innermost path is set as LAYER0, and outward in turn the paths are set as LAYER1, LAYER2...LAYERn; each layer is similar to a pipeline; when protection switching occurs on an outer layer, all services of the inner layers would be switched to an effective outer-layer path.

A protection table for each layer and a forwarding table corresponding to the protection table are set in the disclosure; the entire forwarding is based on level-to-level finding; an actual forwarding path and service forwarding information are obtained by finally integrating the forwarding information of each layer.

The structure of the protection table is as follows.

| |
|---|
| LAYER protect status |
| LAYER_indexMain |
| LAYER_indexSpare |

The structure of the corresponding forwarding table is as follows.

| |
|---|
| Current LAYER forwarding information |
| Outer LAYER protect flag |
| Outer LAYER index |

One protection table corresponds to two forwarding tables. When n is 2 in Fig. 3, what shown in Fig. 4 should be protection and forwarding tables corresponding to Fig. 3.

When it is needed to forward a message, it is judged whether LAYER0 functions as protection.

If the current layer does not function as protection, a LAYER0 forwarding index Table 4 is queried to select a working path; the table structure of the forwarding index table is the same as that of the forwarding table corresponding to the protection table, wherein forwarding information in the forwarding index table is a working path label.

If the LAYER0 functions as protection, a LAYER0 protection Table 1 is queried to acquire a LAYER0 main/spare forwarding index, and it is learned whether to select a main protection path or a spare protection path currently according to the LAYER protect status information, that is, main/spare status information. If the main protection path is selected, a corresponding LAYER0 forwarding Table one 2 is queried through the LAYER_indexMain; if the spare protection path is selected, a corresponding LAYER0 forwarding Table two 3 is queried through the LAYER_indexSpare. And then according to the LAYER0 forwarding Table one 2 or LAYER0 forwarding Table two 3, LAYER0 forwarding information is acquired, wherein the LAYER0 forwarding information is protection path information, which generally is a protection path label.

It is judged whether or not the current layer is the outermost layer, if not, the LAYER0 forwarding Table one 2 or LAYER0 forwarding Table two 3 is queried; taking the LAYER0 forwarding Table one 2 for example, it can be learned whether or not the outer LAYER1 functions as protection by querying a LAYER1 protect flag; for example, the LAYER1 functions as protection when the LAYER1 protect flag is 1, and the LAYER1 does not function as protection when the LAYER1 protect flag is 0. When the LAYER1 protect flag is 1, the LAYER1 index0 points to a LAYER1 protection Table 5; when the LAYER1 protect flag is 0, the LAYER1 index0 points to a LAYER1 forwarding index Table one 6; and forwarding path information of the outer LAYER1 can be obtained according to the outer LAYER1 protection Table 5 or outer LAYER1 forwarding index Table one 6. And by such analogy, until forwarding path information of the outermost layer is obtained.

If the layer is the outermost layer, the forwarding path information of each layer is integrated, and the message is forwarded according to the protection path or working path selected by each layer.

The multilayer protection device provided by the disclosure sets a protection table at each layer to provide forwarding path information needed by protection switching, in view of multilayer application scenes in a network, thereby providing the protection switching for the multilayer application scenes in the network.

Referring to Fig. 8, in an embodiment of a multilayer protection device of the disclosure, the selection module 20 may further include:
a query unit 21, which is configured to query a corresponding forwarding table according to the protection table of the current layer; and
an acquisition unit 22, which is configured to acquire protection path information according to the forwarding table.

In an embodiment of a multilayer protection device of the disclosure, the forwarding table includes: current layer forwarding information, a protection flag and a path index. The protection table of the current layer includes: main-spare switching status information, a main protection path index and/or a spare protection path index.

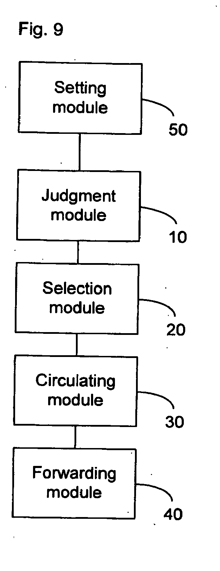

Referring to Fig. 9, another embodiment of a multilayer protection device of the disclosure is provided, which further includes:
a setting module 50, which is configured to set main-spare switching status information in the protection table of the current layer.

Take Fig. 3 for example, PW services may belong to LAYER0; LDP services may belong to LAYER1; and TE may belong to LAYER2.

When protection switching occurs on LAYER0, that is, protection switching occurs on the PW, it is only needed to set the LAYER protect status information as main-to-spare status in the protection table of LAYER0.

By such analogy, for the protection switching of each layer, it is only needed to change the LAYER protection status information in the protection table of the current layer, so that a correct forwarding path can be selected to forward the message when the message arrives.

On the basis of the previous embodiment, this embodiment sets main-spare switching status information according to the protection switching of each layer, so as to select a correct forwarding path.

## Claims

1. A multilayer protection method for a multilayer application scene in a network, **characterized in that** the method comprises:
judging whether or not a current layer functions as protection when it is needed to forward a message (101); when the current layer functions as protection, selecting a protection path according to a protection table of the current layer, otherwise selecting a working path (102);
when the current layer is not an outermost layer, entering a next layer according to the protection path or the working path, and returning to a judgement of whether or not the next layer functions as protection (103); when the current layer is the outermost layer, forwarding the message according to the protection path or the working path selected by each layer (104);
wherein the current layer refers to one of layers of the multilayer application scene in the network.

2. The method according to claim 1, wherein the selecting a protection path according to a protection table of the current layer comprises:
querying a corresponding forwarding table according to the protection table of the current layer (1021), and acquiring protection path information according to the forwarding table (1022).

3. The method according to claim 2, wherein the forwarding table comprises: current layer forwarding information, a protection flag and a path index.

4. The method according to claim 1, wherein the protection table of the current layer comprises: main-spare switching status information, a main protection path index and/or a spare protection path index.

5. The method according to any one of claims 1 to 4, further comprising: before judging whether or not a current layer functions as protection, setting main-spare switching status information in the protection table of the current layer (100).

6. A multilayer protection device for a multilayer application scene in a network, **characterized in that** the device comprises:
a judgment module (10), which is configured to judge whether or not a current layer functions as protection when it is needed to forward a message;
a selection module (20), which is configured to select a protection path according to a protection table of the current layer when the current layer functions as protection, and to select a working path when the current layer does not function as protection;
a circulating module (30), which is configured to enter a next layer according to the protection path or the working path when the current layer is not an outermost layer, and to return to a judgment of whether or not the next layer functions as protection; and
a forwarding module (40), which is configured to forward the message according to the protection path or the working path selected by each layer when the current layer is the outermost layer;
wherein the current layer refers to one of layers of the multilayer application scene in the network.

7. The device according to claim 6, wherein the selection module (20) comprises:
a query unit (21), which is configured to query a corresponding forwarding table according to the protection table of the current layer; and
an acquisition unit (22), which is configured to acquire protection path information according to the forwarding table queried by the query unit (21).

8. The device according to claim 7, wherein the forwarding table comprises: current layer forwarding information, a protection flag and a path index.

9. The device according to claim 6, wherein the protection table of the current layer comprises: main-spare switching status information, a main protection path index and/or a spare protection path index.

10. The device according to any one of claims 6 to 9, further comprising:
a setting module (50), which is configured to set main-spare switching status information in the protection table of the current layer.

## Patentansprüche

1. Mehrschichtschutzverfahren für eine Mehrschichtanwendungsszene in einem Netzwerk, **dadurch gekennzeichnet, dass** das Verfahren aufweist:
Beurteilen, ob eine gegenwärtige Schicht als Schutz dient oder nicht, wenn es notwendig ist, eine Nachricht weiterzuleiten (101); wenn die gegenwärtige Schicht als Schutz dient, Auswählen eines Schutzpfades gemäß einer Schutztabelle der gegenwärtigen Schicht, andernfalls Auswählen eines Arbeitspfades (102);
wenn die gegenwärtige Schicht keine äußerste Schicht ist, Eintreten in eine nächste Schicht gemäß dem Schutzpfad oder dem Arbeitspfad, und Zurückkehren zu einer Beurteilung, ob die nächste Schicht als Schutz dient oder nicht (103); wenn die gegenwärtige Schicht die äußerste Schicht ist, Weiterleiten der Nachricht gemäß dem Schutzpfad oder dem Arbeitspfad, der durch jede Schicht ausgewählt wird (104);
wobei die gegenwärtige Schicht eine der Schichten der Mehrschichtanwendungsszene im Netzwerk bezeichnet.

2. Verfahren nach Anspruch 1, wobei das Auswählen eines Schutzpfades gemäß einer Schutztabelle der gegenwärtigen Schicht aufweist:
Abfragen einer entsprechenden Weiterleitungstabelle gemäß der Schutztabelle der gegenwärtigen Schicht (1021), und Erfassen von Schutzpfadinformationen gemäß der Weiterleitungstabelle (1022).

3. Verfahren nach Anspruch 2, wobei die Weiterleitungstabelle aufweist: Weiterleitungsinformationen der gegenwärtigen Schicht, einen Schutzmerker und einen Pfadindex.

4. Verfahren nach Anspruch 1, wobei die Schutztabelle der gegenwärtigen Schicht aufweist: Haupt-Ersatz-Umschaltstatusinformationen, einen Hauptschutzpfadindex und/ oder einen Ersatzschutzpfadindex.

5. Verfahren nach einem der Ansprüche 1 bis 4, das ferner aufweist: vor dem Beurteilen, ob eine gegenwärtige Schicht als Schutz dient oder nicht, Festlegen von Haupt-Ersatz-Umschaltstatusinformationen in der Schutztabelle der gegenwärtigen Schicht (100).

6. Mehrschichtschutzvorrichtung für eine Mehrschichtanwendungsszene in einem Netzwerk, **dadurch gekennzeichnet, dass** die Vorrichtung aufweist:
ein Beurteilungsmodul (10), das konfiguriert ist, zu beurteilen, ob eine gegenwärtige Schicht als Schutz dient oder nicht, wenn es notwendig ist, eine Nachricht weiterzuleiten;
ein Auswahlmodul (20), das konfiguriert ist, einen Schutzpfad gemäß einer Schutztabelle der gegenwärtigen Schicht auszuwählen, wenn die gegenwärtige Schicht als Schutz dient, und einen Arbeitspfad auszuwählen, wenn die gegenwärtige Schicht nicht als Schutz dient;
ein Zirkulationsmodul (30), das konfiguriert ist, gemäß dem Schutzpfad oder dem Arbeitspfad in eine nächste Schicht einzutreten, wenn die gegenwärtige Schicht keine äußerste Schicht ist, und eine Beurteilung zurückzugeben, ob die nächste Schicht als Schutz dient oder nicht; und
ein Weiterleitungsmodul (40), das konfiguriert ist, die Nachricht gemäß dem Schutzpfad oder dem Arbeitspfad weiterzuleiten, der durch jede Schicht ausgewählt wird, wenn die gegenwärtige Schicht die äußerste Schicht ist;
wobei die gegenwärtige Schicht eine der Schichten der Mehrschichtanwendungsszene im Netzwerk bezeichnet.

7. Vorrichtung nach Anspruch 6, wobei das Auswahlmodul (20) aufweist:
eine Abfrageeinheit (21), die konfiguriert ist, eine entsprechende Weiterleitungstabelle gemäß der Schutztabelle der gegenwärtigen Schicht abzufragen; und
eine Erfassungseinheit (22), die konfiguriert ist, Schutzpfadinformationen gemäß der durch die Abfrageeinheit (21) abgefragten Weiterleitungstabelle zu erfassen.

8. Vorrichtung nach Anspruch 7, wobei die Weiterleitungstabelle aufweist: Weiterleitungsinformationen der gegenwärtigen Schicht, einen Schutzmerker und einen Pfadindex.

9. Vorrichtung nach Anspruch 6, wobei die Schutztabelle der gegenwärtigen Schicht aufweist: Haupt-Ersatz-Umschaltstatusinformationen, einen Hauptschutzpfadindex und/ oder einen Ersatzschutzpfadindex.

10. Vorrichtung nach einem der Ansprüche 6 bis 9, die ferner aufweist:
ein Festlegungsmodul (50), das konfiguriert ist, Haupt-Ersatz-Umschaltstatusinformationen in der Schutztabelle der gegenwärtigen Schicht festzulegen.

## Revendications

1. Procédé de protection multicouches pour une scène d'application multicouches dans un réseau, **caractérisé en ce que** ledit procédé comprend :
la détermination si une couche actuelle fonctionne ou non en tant que protection quand elle est exigée pour transmettre un message (101) ; si la couche actuelle fonctionne en tant que protection, la sélection d'un chemin de protection en fonction d'une table de protection de la couche actuelle, sinon, la sélection d'un chemin de travail (102) ;
si la couche actuelle n'est pas une couche ultrapériphérique, l'entrée d'une couche suivante en fonction du chemin de protection ou du chemin de travail, et le retour à la détermination si la couche suivante fonctionne ou non en tant que protection (103) ; si la couche actuelle est la couche ultrapériphérique, la transmission du message en fonction du chemin de protection ou du chemin de travail sélectionné par chaque couche (104) ;
la couche actuelle se rapportant à une des couches de la scène d'application multicouches dans le réseau.

2. Procédé selon la revendication 1, où la sélection d'un chemin de protection en fonction d'une table de protection de la couche actuelle comprend :
l'appel d'une table de transmission correspondante en fonction de la table de protection de la couche actuelle (1021), et l'acquisition d'un chemin de protection information en fonction de la table de transmission (1022).

3. Procédé selon la revendication 2, où la table de transmission comprend : une information de transmission de couche actuelle, un marqueur de protection et un index de chemin.

4. Procédé selon la revendication 1, où la table de protection de la couche actuelle comprend : une information d'état de commutation de réserve principale, un index de chemin de protection principal et/ou un index de chemin de protection de réserve.

5. Procédé selon l'une des revendications 1 à 4, comprenant en outre : préalablement à la détermination si une couche actuelle fonctionne ou non en tant que protection, la fixation d'une information d'état de commutation de réserve principale dans la table de protection de la couche actuelle (100).

6. Dispositif de protection multicouches pour une scène d'application multicouches dans un réseau, **caractérisé en ce que** ledit dispositif comprend :
un module de détermination (10), prévu pour déterminer si une couche actuelle fonctionne ou non en tant que protection quand elle est exigée pour transmettre un message ;
un module de sélection (20), prévu pour sélectionner un chemin de protection en fonction d'une table de protection de la couche actuelle si la couche actuelle fonctionne en tant que protection, et pour sélectionner un chemin de travail si la couche actuelle ne fonctionne pas en tant que protection ;
un module de circulation (30), prévu pour enter une couche suivante en fonction du chemin de protection ou du chemin de travail si la couche actuelle n'est pas une couche ultrapériphérique, et pour retourner vers une détermination si la couche suivante fonctionne ou non en tant que protection ; et
un module de transmission (40), prévu pour transmettre le message en fonction du chemin de protection ou du chemin de travail sélectionné par chaque couche si la couche actuelle est la couche ultrapériphérique ;
la couche actuelle se rapportant à une des couches de la scène d'application multicouches dans le réseau.

7. Dispositif selon la revendication 6, où le module de sélection (20) comprend :
une unité d'appel (21), prévue pour appeler une table de transmission correspondante en fonction de la table de protection de la couche actuelle ; et
une unité d'acquisition (22), prévue pour acquérir une information de chemin de protection en fonction de la table de transmission appelée par l'unité d'appel (21).

8. Dispositif selon la revendication 7, où la table de transmission comprend : une information de transmission de couche actuelle, un marqueur de protection et un index de chemin.

9. Dispositif selon la revendication 6, où la table de protection de la couche actuelle comprend : une information d'état de commutation de réserve principale, un index de chemin de protection principal et/ou un index de chemin de protection de réserve.

10. Dispositif selon l'une des revendications 6 à 9, comprenant en outre :
un module de fixation (50), prévu pour fixer une information d'état de commutation de réserve principale dans la table de protection de la couche actuelle.
